# EUROPÄISCHE PATENTSCHRIFT

(11) **EP 2 128 044 B1**
(45) Veröffentlichungstag und Bekanntmachung des Hinweises auf die Patenterteilung: **17.09.2014**
(21) Anmeldenummer: 09006674.7
(22) Anmeldetag: 18.05.2009
(51) Int. Cl.: B65D 90/00, B60P 7/08, B60P 7/14, B63B 25/24

(54) **Modulares Verzurrsystem für die Sicherung von Ladeeinhelten, Verfahren zur Sicherung von Ladungen in geschlossenen Containern**
Modular lashing system for the securing of loading units, Method for securing loading units in closed containers
Système de serrage modulaire pour la sécurisation d'unités de chargement, Méthode pour protéger le chargement de containers fermés

(30) Priorität: 22.05.2008 DE 102008024720
(43) Veröffentlichungstag der Anmeldung: 02.12.2009
(73) Patentinhaber: Rainer GmbH, 51145 Köln (DE)
(72) Erfinder: Heinz, Rainer, 51145 Köln (DE)
(74) Vertreter: Cohausz Hannig Borkowski Wißgott

(56) Entgegenhaltungen:
- EP-A- 1 661 758
- DE-B3-102005 039 789
- US-A- 5 398 832
- US-A- 5 551 379
- US-A1- 2007 267 410

## Beschreibung

Die Erfindung betrifft ein Verzurrsystem zur Sicherung von Ladungen in einem Container (1), umfassend einen Container (1), wobei der Container einen Containerboden (2) und ein Containerdach (5) aufweist, die Ladung haltenden Lashings, Containerösen an Dachlängsträgern (7) und/oder an Bodenlängsträgern (6) des Containers (1), Abstandshalter (20).

Ladeeinheiten sind Verpackungen von festen, staubförmigen, gasförmigen oder flüssigen Gütern jeglicher Art oder diese Güter selbst. Ladeeinheiten können sowohl lose, z.B. als kleine Kartons oder Kunststoffbehälter, aber auch als Palettenware oder Kisten oder große Maschinenteile oder den Container komplett ausfüllende Kunststoffsäcke (Inliner) vorliegen.

Um Container mit ungleichen Frachtgütern möglichst vollständig zu beladen, beschreibt die DE 200 09 454 U1 Vorrichtungen zur Bildung von Abteilungen innerhalb von Containern. Dabei wird ein flexibler, reißfester Hängegurt aus einem Textil- oder Kunststoffmaterial in die Zurr-Ösen oder sonstigen Befestigungspunkte des Containers eingehängt. Der Hängegurt weist über seine Länge verteilt mehrere hängende Schlaufen auf, durch die Querstäbe durchsteckbar sind, deren Enden in die vertikalen Nuten der profilierten Seitenwände des Containers eingreifen oder an deren vorstehende Verformungen anliegen.

Transportbedingte Belastungen durch Bewegungen von Transportgütern auf Lastkraftwagen, Flugzeugen, Bahn oder Schiff führen immer wieder zu hohen Schäden an Gütern, wenn diese nicht oder nicht ausreichend gesichert werden. Vielfach werden diese Container mit Gütern beladen und ohne Sicherung versandt.

DE195 22 138 A1 offenbart eine Transportsicherung zum Auflegen auf die Ladefläche, wobei diese an ihrer Oberfläche mit Verzurrösen zum Verzurren von Maschinen und Geräten auf Rollen mit Hilfe von Spanngurten versehen ist und ein U- oder L-Profil aufweist, in das die Rollen eingesetzt werden können. An der Unterseite befinden sich Stahlkrallen, die ein Verrutschen während der Fahrt verhindern.

US 2,197, 598 offenbart ein System zum Packen einer rechteckigen Anordnung von Artikeln, wobei die Artikel sich zwischen zwei unflexiblen rechteckigen Platten befinden, die acht Ecken des Quaders besonders verstärkt sind und die ganze Anordnung an den Seiten diagonal verschnürt ist.

DE 3443662 C2 offenbart eine Vorrichtung zum Verzurren von Fahrzeugen auf Transportpaletten für die Luftverfrachtung.

US 5,813,536 offenbart eine Packung für den Transport und die Aufbewahrung von Glasplatten, wobei die Ecken und Kanten der Packung mit speziellen Pastikkappen geschützt sind und die ganze Packung mit strammen Bändern zusammengebunden ist.

Ferner ist aus der EP 1661758 A2 eine Vorrichtung zur Befestigung von Largegütern im Inneren von Containern bekannt.

Vor allem die auf Übersee-Containern und damit auf die darin befindlichen Güter einwirkenden Transportbelastungen werden von den Beladenden vielfach unterschätzt. Von den Versicherern werden hohe Schadenssummen genannt, die jährlich auf Fehler im Bereich der Verladung und Ladungssicherung in Übersee-Containern zurückzuführen sind. Während fehlende oder fehlerhafte Ladungssicherung auf einem LKW bei extremen Fahrsituationen, wie zum Beispiel Notbremsung, eventuell durch den Fahrer entdeckt und nachgebessert werden kann, ist dies in einem Übersee-Container auf einem Containerschiff nicht möglich. Vom Zeitpunkt des Schließens der Containertür bis zum Öffnen der Tür am Zielort muss die Ladungssicherung also allen Transportbelastungen genügen.

Übliche Sicherungen sind u.a. Holzkonstruktionen, Sperrstangen, Airbags, Netze, Folien und Verzurrbänder unterschiedlicher Konsistenz. Diese Materialien werden entsprechend der Ladungssicherungsaufgabe beim Verladevorgang vorbereitet und dann verarbeitet. Beispiele: Holzbalken werden an die Bedürfnisse der Aufgabe angepasst und in die Sicken der Container eingeschlagen. Airbags werden in Ladelücken positioniert und aufgeblasen. Netze werden montiert und gespannt, Ladeeinheiten mit Folien umhüllt und gesichert, Spanngurte und Bandmaterialien nach Bedarf auf Länge geschnitten, angebracht und verspannt.

Alle Ladungssicherungsmittel die im Container Verwendung finden, sind bis auf wenige Ausnahmen nur für diesen einen Transportvorgang im Einsatz. Eine Wiederverwendung der Mittel scheitert wegen hoher Rücktransportkosten, denn Container sind weltweit im Einsatz. Alle bekannten Hilfsmittel für die Ladungssicherung im Container sind deshalb Einwegsicherungen. Im Gegensatz zu Mehrweg-Produkten sollten diese deshalb kostengünstig sein, die ungleich schwierige Ladungssicherungsaufgabe im Container jedoch erfüllen und dann auch sicher und kostengünstig entsorgt werden können.

Es gibt keine technisch eindeutig begründbaren Vorgaben von Seiten der Behörden oder anderen branchenspezifischen Fachorganisationen, wie und mit welchen Mitteln Ladungssicherung im Übersee-Container auszuführen ist. Einige Publikationen erläutern" Empfehlungen" für Ladungssicherungstechniken, die sich in der Vergangenheit bewährt haben. Allen Empfehlungen ist gemein, dass rechnerische Nachweise der Ladungssicherungstechnik für zu sichernde Ladeeinheiten im Container nicht bekannt sind.

Ziel jeder Ladungssicherung ist im Allgemeinen die Bildung von Gruppen oder Blöcken, die zusammengefasst eine Bewegung des Ladegutes verhindern sollen. Dies gelingt im Container nur schwer, weil Formschluss mit den geometrisch vorgegebenen Wänden des Containers nicht immer erzielt werden kann und damit Bewegungen einer ganzen Gruppe von Ladeeinheiten möglich sind. Zwar gibt es Ladungssicherungsmittel wie z. B. Airbags, mit denen Lücken im Container ausgefüllt werden können. Welche Ladungssicherungswirkung damit zu erzielen ist, kann rechnerisch jedoch nicht effektiv genug nachgewiesen werden.

Auch bei der Verwendung von handelsüblichen Verzurrmaterialien sind rechnerische Nachweise über die Qualität der Ladungssicherung bezogen auf die zu sichernden Ladeeinheiten unter Einfluss des geometrischen Verlaufs der Verzurrung und unter Berücksichtigung der zulässigen Belastungen der Verzurrösen im Container nicht bekannt.

Bewegung der Ladeeinheiten im Container bedeuten während des Transports auf einem Containerschiff immer wiederkehrende Belastungen der Güter (dynamische Kraftwirkungen beim Stampfen und Rollen eines Container-Schiffs). Bewegungen der Ladeeinheiten während der Verladung der Container vom Pier in das Schiff bedeuten vielfach hohe Stoßbelastungen, die bis zu einem Mehrfachen des Gewichts der Güter reichen können.

Ein Verzurrsystem muss in der Lage sein, die Ladeeinheiten im Container während des kompletten Transportverlaufs so zu sichern, dass entstehende Kraftwirkungen keine Schäden an der Ware, am Container und in der Umwelt verursachen können. Ein Verzurrsystem für Übersee-Container soll deshalb produktspezifisch bzw. dem Ladegut entsprechend angepasst werden können.

Die Ladungssicherung auf Straßenfahrzeugen wird in DIN EN 12640 und in der FVDI Richtlinie VDI 2700 beschrieben. Die Ladungssicherung im Übersee-Container wird u.a. in der CTU Packrichtlinie des LIS der BAM und im Containerhandbuch des GDV beschrieben.

Es ist Aufgabe der vorliegenden Erfindung ein neues Verzurrsystem zur Sicherung von Ladungen in geschlossenen Ladungsträgern, wie beispielsweise Containern, zur Verfügung zu stellen, das die im Rahmen des Transportvorgangs auftretende Kräfte - im Rahmen einer überschaubaren plastischen und elastischen Verformung des Systems - ableiten kann.

Die Aufgabe wird durch ein Verzurrsystem gemäß Anspruch 1 und ein Verfahren gemäß Anspruch 20 gelöst.

Es wurde ein Verzurrsystem zur Sicherung von Ladungen in Containern mit Hilfe von Lashings gefunden, das dadurch gekennzeichnet ist, dass die Ladung über schräg gespannte Lashings mit dem Container verbunden ist, wobei die Lashings durch senkrechte Abstandhalter fixiert werden, und das System modular aufgebaut ist.

Mit Hilfe des erfindungsgemäßen Verzurrsystems können die im Rahmen eines Transportvorgangs auftretenden Kräfte in mathematisch reproduzierbarer Weise an die starken Konstruktionsteile des Containers abgeleitet werden.

Vorzugsweise handelt es sich bei den Containern um Transportvorrichtungen für Ladegut, bei denen die Ladung mittels Verzurrbändem in geeigneten Bereichen, beispielsweise am Boden, im oberen Rahmen oder an sonstigen starken Konstruktionsteilen des Containers befestigt werden kann. Bevorzugte Container können beispielsweise Transportvorrichtungen sein, bei denen die Verzurrbänder an Befestigungspunkten, z. B. an Ösen befestigt werden können und so das Ladegut sichern.

Bevorzugte Container im Rahmen der vorliegenden Erfindung können Lastwagen, Container und Ladeflächen in Flugzeugen oder Schiffen sein.

Die Befestigungspunkte sind in der Regel symmetrisch im Container angebracht, so dass sich die auf die Ladung wirkenden Kräfte gleichmäßig verteilen. Zur Sicherung des Ladegutes sind in der Regel mindesten vier Befestigungspunkte pro Verzurrsystem erforderlich. Befestigungspunkte können beispielsweise Ösen sein. Eine aus der Praxis bekannte Art von Containern, die insbesondere zum Transport von in Kanistern, Fässern oder ähnlichen Behältnissen aufgenommenen chemischen Produkten dient, weist an den Seitenwänden des Containers nahe des Bodens und nahe der Decke jeweils eine Reihe von fünf Ösen in jeweils gleichen Abständen auf. Die Ösen sind dabei so angeordnet, dass sich jeweils paarweise an Boden und Decke des Containers Ösen gegenüberliegen. Diese Anordnung ermöglicht es auf einfache Weise, zwischen diesen sich paarweise gegenüberliegenden Ösen senkrechte Abstandshalter anzubringen.

Die senkrechten Abstandshalter weisen vorzugsweise eine Mehrzahl von zueinander beanstandeten Öffnungen auf, die zur Aufnahme der Lashings dienen. Hierdurch wird es vorteilhaft möglich, auf flexible Weise Lashings in unterschiedlicher Höhe an den senkrechten Abstandshaltern zu befestigen. Somit kann eine Verzurrung von Ladeeinheiten in dem Container flexibel an die Geometrie der jeweiligen Ladungsanordnung angepasst werden:

Erfindungsgemäß sind die senkrechten Abstandshalter dazu aus einem Gewebeband ausgebildet, das in regelmäßigen, relativ kleinen Abständen Öffnungen aufweist, durch welche Lashings hindurchgefädelt werden können. Zweckmäßig sind die Öffnungen dabei so ausgebildet, dass Fasern des Gewebebands nicht durch die Öffnungen aufgetrennt werden. Dies wird dadurch erreicht, dass die Öffnungen nicht nachträglich in ein fertiges Gewebeband beispielsweise durch Schneiden eingebracht werden, sondern dass bei der Erstellung des Gewebebands durch Aufteilung der Kettfäden in regelmäßigen Abständen Schlaufen in dem Gewebeband erzeugt werden. Durch diese Webtechnik können Öffnungen in dem Gewebeband erzeugt werden, die eine besonders hohe Festigkeit aufweisen. Ein Ausreißen der Öffnungen bei hoher Kraftbeanspruchung der Lashings kann dadurch vorteilhaft vermieden werden.

Zweckmäßig ist die Länge der senkrechten Abstandshalter auf den Abstand zweier sich gegenüberliegender Befestigungspunkte abgestimmt. Eine Befestigung der senkrechten Abstandshalter an den Befestigungspunkten kann dabei vorzugsweise durch Haken, beispielsweise Karabinerhaken, an als Ösen ausgebildeten Befestigungspunkten erfolgen.

Als Ladung seien homogen und inhomogen gestapelte Bestandteile auch unterschiedlicher Zusammensetzung genannt. Bevorzugte Ladungen sind Fässer und Kisten unterschiedlicher Größe.

Die als Lashings bezeichneten Haltegurte können aus Kunststoffasern und/oder Baumwolle sein. Es kommen hierbei handelsübliche und gegebenenfalls neu entwickelte Gurtbandqualitäten zum Einsatz. Insbesondere bei der Verwendung der Lashings in zum Hochseetransport bestimmten Containern ergeben sich hohe Anforderungen an die Festigkeit und die elastischen Eigenschaften der Lashings, da die typischen, sich in kurzen Zeitabständen wiederholenden Kraftbelastungen durch dauerhafte, plastische Verformung der Lashings zu einem Lockern der Verzurrung führen können. Entsprechend weisen die verwendeten Lashings vorzugsweise eine hohe Elastizität und eine nur sehr geringe oder gar keine plastische Verformbarkeit auf.

Die Gurtbänder können in an sich bekannter Weise, z. B. durch Weben unter Verwendung von an sich bekannten Fasern und einer üblichen Nachbehandlung, beispielsweise durch Erhitzung, hergestellt werden.

Erfindungsgemäß ist vorgesehen, dass die Lashings (12) als modulares Verzurrsystem ausgeführt sind, dass Lashing-Module vorgesehen sind, dass die Module mindestens Horizontallashings (19) und senkrechte Abstandhalter (20) umfassen, dass die Lashings (12) durch senkrechte Abstandhalter (20) fixiert werden, wobei die senkrechten Abstandhalter (20), aus Gewebeband bestehen und in regelmäßigen, relativ kleinen Abständen eine Mehrzahl von zueinander beabstandeten Öffnungen aufweisen, die zur Aufnahme der Lashings (12) dienen, wobei die Öffnungen durch Aufteilung der Kettfäden in regelmäßigen Abständen in dem Gewebeband erzeugt werden, dass die Lashings (12) in unterschiedlicher Höhe an den senkrechten Abstandshaltern (20) befestigt sind, dass die Ladungen über schräg gespannte Lashings (12) mit dem Container (1) verbunden sind, wobei die Lashings (12) in einem Winkel zwischen Containerdach (2) und Lashing (12) und/oder zwischen Containerboden (5) und Lashing (12) von höchstens 35° mit dem jeweiligen Befestigungspunkt des Containers (1) verbunden sind.

Dabei sind nahe der Ecken des Containers an den langen Seitenwänden jeweils senkrechte Abstandshalter angeordnet. Vorzugsweise werden die senkrechten Abstandshalter dabei jeweils zwischen sich gegenüberliegenden Befestigungspunkten nahe des Bodens und der Decke des Containers gespannt. Weiter werden etwa in der Mitte der Seitenwände nahe des Bodens oder der Decke des Containers Lashings befestigt, welche durch Öffnungen der senkrechten Abstandshalter geführt werden. Dabei kann der Winkel, den die Lashings dabei mit dem Boden bzw. der Decke des Containers einschließen, durch die Wahl von Öffnungen des senkrechten Abstandshalters in unterschiedlicher Höhe flexibel eingestellt werden. Ein besonders kleiner Winkel zwischen den Lashings und dem Boden bzw. der Decke des Containers ist dabei bevorzugt, da somit horizontal auf die Ladung einwirkende Kräfte besonders gut durch die Lashings aufgenommen werden kann, ohne dass die Gefahr eines Abrutschens der Lashings von der Ladung besteht.

Die Befestigung der Ladung mit dem Containerboden bzw. dem Containerdach erfolgt durch schräg gespannte Lashings. Die Lashings sind in einem Winkel zwischen Containerboden bzw. dem Containerdach und Lashing von höchstens etwa 35°, bevorzugt 1 bis 20°, im Besonderen bevorzugt 5 bis 15°, mit dem jeweiligen Befestigungspunkt des Containers verbunden. Im Rahmen der vorliegenden Erfindung ist es besonders vorteilhaft, wenn, soweit technisch möglich, der Befestigungswinkel möglichst klein ist.

Eine besondere Ausführungsform der vorliegenden Erfindung ist dadurch gekennzeichnet, dass alle Module des Verzurrsystems aus Materialien aus der Gruppe der Kunststofffasern, Naturfasern, Gewebefolien hergestellt sind.

Eine besondere Ausführungsform der vorliegenden Erfindung ist dadurch gekennzeichnet, dass Lashings mit einer Bandbreite im Bereich von 15 bis 500 mm und für Bruchfestigkeiten bis 8.000 daN eingesetzt sind (wobei 1 daN = 10 N = 10 Newton).

Eine besondere Ausführungsform der vorliegenden Erfindung ist dadurch gekennzeichnet, dass als Lashings Folien mit Folienbreiten im Bereich von 100 bis 2.000 mm und für Belastungen bis 5.000 daN eingesetzt werden.

Eine besondere Ausführungsform der vorliegenden Erfindung ist dadurch gekennzeichnet, dass als Lashings Stahlbänder mit einer Bandbreiten von ¾" (19mm) bis 2" (51 mm) und für Belastungen bis 5.000 daN eingesetzt werden.

Eine besondere Ausführungsform der vorliegenden Erfindung ist dadurch gekennzeichnet, dass als Lashing faserverstärkte Folien, Gewebefolien, Kunststoff-, Hanf- oder Stahlseile für Systembelastungen bis 10.000 daN eingesetzt werden.

Eine besondere Ausführungsform der vorliegenden Erfindung ist dadurch gekennzeichnet, dass als Lashing Gurtbänder aus Kunststofffasern mit einer Bandbreite von 15 bis 500 mm und einer Bruchfestigkeit im Bereich von ca. 3.000 bis 8.000 daN betragen, bei einer Bruchdehnung von ca. 7 bis 8% eingesetzt werden.

Eine besondere Ausführungsform der vorliegenden Erfindung ist dadurch gekennzeichnet, dass es als Module Horizontallashing, Abstandshalter, Toplashing, Blocklashing, Backlashing und/oder Bodenlashing enthält.

Eine besondere Ausführungsform der vorliegenden Erfindung ist dadurch gekennzeichnet, dass der Horizontallashing aus Gurtband und Containerhaken besteht.

Eine besondere Ausführungsform der vorliegenden Erfindung ist dadurch gekennzeichnet, dass die Einzelstränge des Moduls Horizontallashing unterschiedlich sind und aus einem der Ladeinheit im Container anzupassendem Verzurrmaterial, Abmessung, Anzahl der Gurtstränge, Festigkeit und Dehnung besteht.

Eine besondere Ausführungsform der vorliegenden Erfindung ist dadurch gekennzeichnet, dass das Gurtband für den Horizontallashing durch einen Containerhaken durchgeführt wird, somit zwei Gurtstränge bildet und am Containerhaken vernäht wird.

Eine besondere Ausführungsform der vorliegenden Erfindung ist dadurch gekennzeichnet, dass das Gurtband für den Horizontallashing durch einen Containerhaken durchgeführt wird, somit zwei Gurtstränge bildet und am Containeraken nicht vernäht wird.

Eine besondere Ausführungsform der vorliegenden Erfindung ist dadurch gekennzeichnet, dass die durch den Containerhaken durchgeführten zwei Gurtstränge gleiche oder unterschiedliche Länge haben.

Eine besondere Ausführungsform der vorliegenden Erfindung ist dadurch gekennzeichnet, dass an einem Containerhaken 1 bis 6 Gurtstränge mit gleicher oder unterschiedlicher Länge, vernäht oder nicht vernäht angebracht sind.

Eine besondere Ausführungsform der vorliegenden Erfindung ist, dadurch gekennzeichnet, dass das Gurtband für den Horizontallashing durch den Containerhaken durchgeführt wird, somit zwei Gurtstränge bildet und am Containerhaken mit Schnallen oder Klammern positioniert ist.

Eine besondere Ausführungsform der vorliegenden Erfindung ist dadurch gekennzeichnet, dass der Horizontallashing mit zwei Gurtsträngen, als durchlaufendes Band und mit auf dem Gurtband angebrachten, in Längsrichtung verschiebbaren Kantenschutzschlauch im Umlenkbereich der Containeröse und ohne Containerhaken ausgeführt ist.

Eine besondere Ausführungsform der vorliegenden Erfindung ist dadurch gekennzeichnet, dass der Horizontallashing gegebenenfalls in allen Ösen des Containers ab Öse 3 eingesetzt ist.

Eine besondere Ausführungsform der vorliegenden Erfindung ist dadurch gekennzeichnet, dass die seitliche Höhenposition der Horizontallashings über Abstandshalter gebildet ist.

Eine besondere Ausführungsform der vorliegenden Erfindung ist dadurch gekennzeichnet, dass die horizontale Umlenkung aller Gurtstränge der Horizontallashings über Abstandshalter gebildet ist.

Eine besondere Ausführungsform der vorliegenden Erfindung ist dadurch gekennzeichnet, dass ein Abstandshalter mit Containerhaken ausgeführt ist und die Länge des Lochbandes der inneren Höhe des Containers entspricht.

Eine besondere Ausführungsform der vorliegenden Erfindung ist dadurch gekennzeichnet, dass der Abstandshalter in einer der Ösen der oberen Dachlängsträger des Containers positioniert wird, die dem Ladungsende am nächsten kommen.

Eine besondere Ausführungsform der vorliegenden Erfindung ist dadurch gekennzeichnet, dass der Abstandshalter aus Gurtbändern gebildet sind.

Eine besondere Ausführungsform der vorliegenden Erfindung ist dadurch gekennzeichnet, dass ein Abstandshalter als Lochband mit 10 mm bis 50 mm Breite und mit Lochabständen von etwa 60 bis 500 mm ausgeführt ist.

Eine besondere Ausführungsform der vorliegenden Erfindung ist dadurch gekennzeichnet, dass ein Abstandshalter als Gurtband mit angenähten Schlaufen in Abständen von etwa 60 mm bis 2.000 mm ausgeführt ist.

Eine besondere Ausführungsform der vorliegenden Erfindung ist dadurch gekennzeichnet, dass ein Abstandshalter als Gurtband mit angenähten Metall- oder Kunststoffteilen in Lochabständen von ca. 60 mm bis 2.000 mm ausgeführt ist.

Eine besondere Ausführungsform der vorliegenden Erfindung ist dadurch gekennzeichnet, dass die Metall- oder Kunststoffteile als Zapfen, Stifte, rechteckige Ösen oder Ringe ausgeführt sind.

Eine besondere Ausführungsform der vorliegenden Erfindung ist dadurch gekennzeichnet, dass ein Abstandshalter ohne Containerhaken für den Einsatz mit Toplashings ausgeführt ist und die Länge des Lochbandes etwa der Höhe der Ladung im Container entspricht.

Eine besondere Ausführungsform der vorliegenden Erfindung ist dadurch gekennzeichnet, dass zwei senkrecht positionierte Abstandshalter im mittleren Frontbereich jedes Ladungsteils einen Toplashing und/oder die oberen Horizontallashings und/oder einen Blocklashing und/oder die unteren Horizontallashings und/oder einen Bodenlashing in Position halten.

Es wurde auch ein Verfahren zur Sicherung von Ladungen in Containern mit Hilfe von Lashings gefunden, das dadurch gekennzeichnet ist, dass die Ladung über schräg gespannte Lashings mit dem Containers verbunden wird und das System modular aufgebaut wird, wobei die Lashings durch senkrechte Abstandhalter fixiert werden.

Entsprechend der Anforderungen der Ladung werden die einzelnen Module Horizontallashing, Abstandshalter, Toplashing, Blocklashing, Backlashing und/oder Bodenlashing eingesetzt.

Bei dem Verfahren gemäß der Erfindung ist vorgesehen, dass die Lashings (12) als modulares Verzurrsystem ausgeführt sind, dass Lashing-Module vorgesehen sind, dass die Module mindestens Horizontallashings (19) und senkrechte Abstandhalter (20) umfassen, dass die Lashings (12) durch senkrechte Abstandhalter (20) fixiert werden, wobei die senkrechten Abstandhalter (20), aus Gewebeband bestehen und in regelmäßigen, relativ kleinen Abständen eine Mehrzahl von zueinander beabstandeten Öffnungen aufweisen, die zur Aufnahme der Lashings (12) dienen, wobei die Öffnungen durch Aufteilung der Kettfäden in regelmäßigen Abständen Schlaufen in dem Gewebeband Schlaufen in dem Gewebeband erzeugt werden, dass die Lashings (12) in unterschiedlicher Höhe an den senkrechten Abstandshaltern (20) befestigt sind, dass die Ladungen über schräg gespannte Lashings (12) mit dem Container (1) verbunden sind, wobei die Lashings (12) in einem Winkel zwischen Containerdach (2) und Lashing (12) und/oder zwischen Containerboden (5) und Lashing (12) von höchstens 35° mit dem jeweiligen Befestigungspunkt des Containers (1) verbunden sind.

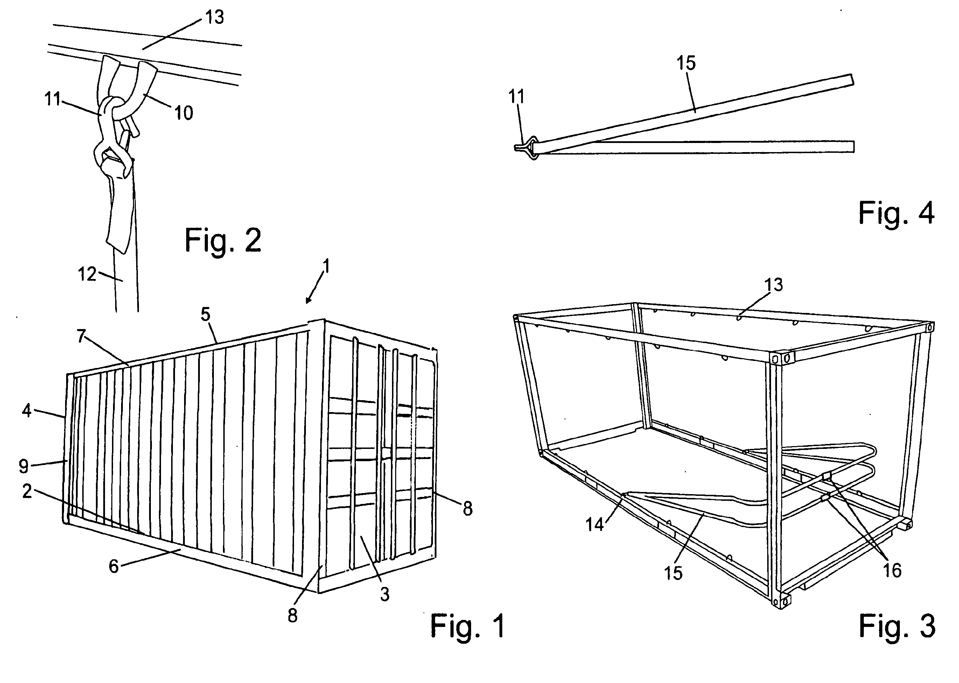

Die Erfindung kann durch die Figuren 1 bis 29 erläutert werden:
In Figur 1 wird ein handelsüblicher Container (1) beschrieben. Der Container (1) besteht aus einem Containerboden (2), dem Containerdach (5), der Tür (3) und der Stirnwand (4). Der Rahmen des Containers (1) setzt sich aus den Bodenlängsträgern (6), den Dachlängsträgern (7), der Türecksäule (8) und der Ecksäule an der Stirnwand (9) zusammen. An den Bodenlängsträgern (6) und dem Dachlängsträgern (7) sind (hier nicht sichtbar) Verzurrösen angebracht.
Figur 2 zeigt einen neuen Containerhaken (11) mit einer Sicherung, für den Einsatz an Verzurrösen (10) im Container (1). Der Containerhaken (11) mit dem Lashing (12) wird immer mit seiner Spitze in Richtung der Containerseitenwand eingesetzt. Damit ist eine eventuelle Beschädigung des Ladegutes durch die Containerhakenspitze weitgehend ausgeschlossen. Da die Verzurrösen immer innerhalb einer Sicke der Containerseitenwand angeschweißt sind, gibt es keine in den Ladebereich eines Containers (1) hinein ragende Metallteile. Vor allem im Bereich des Bodenlängsträgers sind Beschädigungen von Ladeeinheiten durch früher eingesetzte, aus der Containersicke vorstehende Haken (11) nicht mehr gegeben.

Die folgenden Figuren sind Anwendungsbeispiele für das Modul Horizontallashing:
Figur 3 zeigt die beispielhafte Anordnung eines Horizontallashing-Paares mit jeweils zwei Einzelsträngen (15) in einer bevorzugten Ausführung des Verzurrsystems positioniert in Öse Nr. 3 (14) der beiden inneren Bodenlängsträger in einem Container mit nicht dargestellter Ladung. Die Einzelstränge (15) sind mit einem Gurtschloss (16) verbunden.
Figur 4 zeigt die Konstruktion eines Horizontallashings mit jeweils zwei Einzelsträngen (15) und Containerhaken (11). Die Länge der Einzelstränge beträgt zwischen 3 und 12 m. Die Gesamtlänge eines für zwei Einzelstränge benötigten Gurtbandes beträgt zwischen 6 und 24 m. Für eine bevorzugte Ausführung des Verzurrsystems beträgt die Länge eines Einzelstranges 5 m. Die Gesamtlänge eines für zwei Einzelstränge benötigten Gurtbandes dieser Ausführung beträgt 10 m. Diese Ausführung ist im Umlenkbereich des Gurtbandes am Containerhaken mit einer Nähnaht versehen.

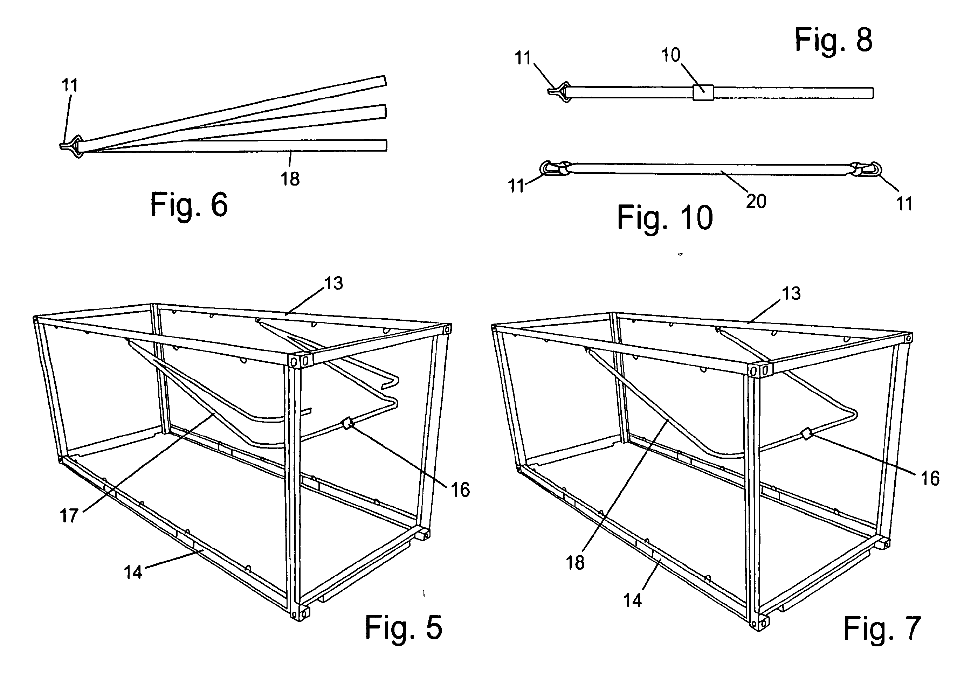

Figur 5 zeigt die beispielhafte Anordnung eines Horizontallashing-Paares mit jeweils zwei Einzelsträngen (17) in einer bevorzugten Ausführung des Verzurrsystems positioniert in Öse Nr. 3 der beiden Dachlängsträger (13) eines Containers (1) mit nicht dargestellter Ladung.
Figur 6 zeigt die Konstruktion eines Horizontallashings mit jeweils drei Einzelsträngen (18) und Containerhaken (11), Die Länge der Einzelstränge beträgt zwischen 3 und 12 m. Für eine bevorzugte Ausführung des Verzurrsystems beträgt die Länge eines Einzelstranges 5 m.
Figur 7 zeigt die beispielhafte Anordnung eines Horizontallashing-Paares mit jeweils einem Einzelstrang (18) in einer bevorzugten Ausführung des Verzurrsystems positioniert in Öse Nr. 3 der beiden Dachlängsträger (13) eines Containers mit nicht dargestellter Ladung. Die Einzelstränge (18) sind mit einem Gurtschloss (16) verbunden.
Figur 8 zeigt die Konstruktion eines Horizontallashings mit jeweils einem Einzelstrang (19) und Containerhaken (11). Die Länge des Einzelstranges beträgt zwischen 3 und 12 m. Für eine bevorzugte Ausführung des Verzurrsystems beträgt die Länge eines Einzelstranges 5 m.

Die folgenden Figuren sind Anwendungsbeispiele für das Modul Abstandshalter:

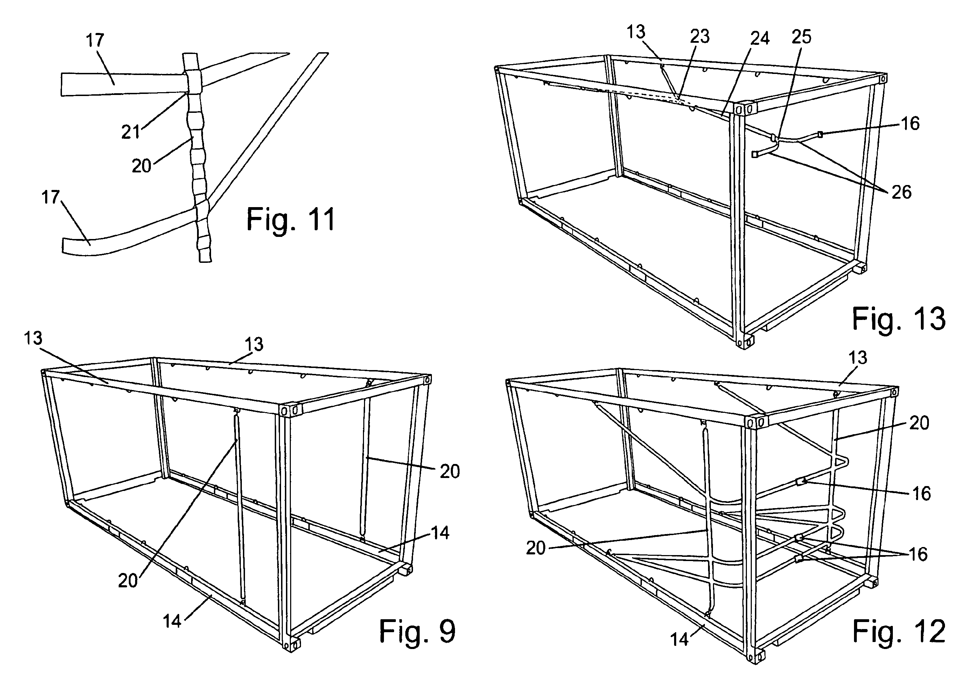

Figur 9 zeigt die beispielhafte Anordnung eines Abstandshalter-Paares (20) in einer bevorzugten Ausführung mit Haken des Verzurrsystems positioniert in Öse Nr. 1 der Längsträger (13 und 14) eines Containers (1) mit nicht dargestellter Ladung.
Figur 10 zeigt die Konstruktion eines Abstandshalters mit jeweils einem Einzelstrang (20) und Containerhaken (11). Die Länge des Einzelstranges (20) beträgt zwischen 1 und 2,50 m. Für eine bevorzugte Ausführung des Verzurrsystems beträgt die Länge eines Einzelstranges 2,20 m. Der Abstandshalter ist in der Regel ein handelsübliches Lochband mit Lochgrößen von 5 bis 6 cm und Lochabständen von 5 bis 6 cm. Die Löcher des Lochbandes werden mittels eines speziellen Verfahrens durch geregeltes Ein- und Ausschalten des Schussfadens im Fertigungsprozess (Weben) hergestellt.
Das Gurtband wird in der Position eines Loches zweigeteilt.
Figur 11 zeigt die beispielhafte Anordnung eines Abstandshalters (20) mit in das Lochband (21) eingeführtem Horizontallashing (17).
Figur 12 zeigt die beispielhafte Anordnung der Module eines Horizontallashing-Paares mit jeweils zwei Einzelsträngen (15) in einer bevorzugten Ausführung des Verzurrsystems positioniert in Öse Nr. 3 der beiden Bodenlängsträger (14), eines Horizontallashing-Paares mit jeweils einem Einzelstrang (18) in einer bevorzugten Ausführung des Verzurrsystems positioniert in Öse Nr. 3 der beiden Dachlängsträger (13), sowie eines Abstandshalter-Paares (20) in einer bevorzugten Ausführung mit Haken des Verzurrsystems positioniert in Öse Nr. 1 der Dachlängsträger (13) eines Containers mit nicht dargestellter Ladung. Die Einzelstränge (15 und 18) sind mit einem Gurtschloss (16) verbunden.

Im Status der Vorbereitung des Verzurrsystems wird jeder Strang der Horizontallashings durch eines der Löcher der Abstandshalter geführt und somit die Höhenposition der Horizontallashings bestimmt.

Die folgenden Figuren sind Anwendungsbeispiele für das Modul Toplashing:
Figur 13 zeigt die beispielhafte Anordnung eines Toplashings mit einem Einzelstrang (24) in einer bevorzugten Ausführung des Verzurrsystems positioniert in Öse Nr. 4 der beiden Dachlängsträger (13) eines Containers mit nicht dargestellter Ladung.

Der Einzelstrang (24) ist über die Stegschnalle (23) in zwei Einzelstränge verzweigt und mit dem inneren Dachlängsträger (13) verbunden. Auf der anderen Seite teilt sich der Einzelstrang (24) über die Verzweigung (25) in zwei Einzelstränge (26), die mit den Gurtschlössern (16) mit anderen Lashings verbunden sind.

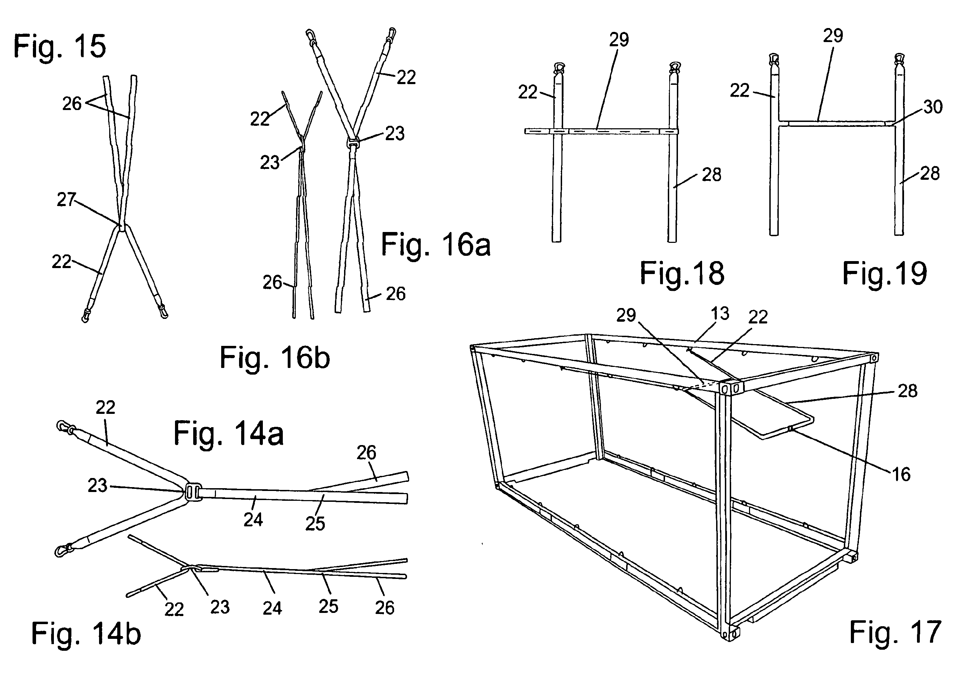

Figur 14a zeigt die Konstruktion eines Toplashings mit jeweils einem Hakenstrang (22) und Containerhaken auf beiden Seiten. Über eine Stegschnalle (23) wird ein Einzelstrang (24) zu einer Verzweigung (25) geführt, von der zwei Einzelstränge (26) ausgehen, die mit den Gurtschlössern (16) mit anderen Lashings verbunden sind.

Für eine bevorzugte Ausführung des Verzurrsystems beträgt die Länge eines Toplashings zwischen 3 m und 7 m.

Figur 14b zeigt die Konstruktion eines Toplashings mit jeweils einem Hakenstrang (22) und Containerhaken auf beiden Seiten. Über eine Stegschnalle (23) und eine Nähnaht wird eine Verzweigung (26) der Einzelstränge durchgeführt. Für eine bevorzugte Ausführung des Verzurrsystems beträgt die Länge eines Toplashings zwischen 3 m und 7 m.

Figur 15 zeigt die Konstruktion eines Toplashings mit einem Hakenstrang (22) und Containerhaken auf beiden Seiten. Über eine genähte Bandumlenkung (27) wird ein Verzweigung der Einzelstränge (26) durchgeführt.

Für eine bevorzugte Ausführung des Verzurrsystems beträgt die Länge eines Toplashings zwischen 3 m und 7 m.

Figur 16a zeigt die Konstruktion eines Toplashings mit jeweils einem Hakenstrang (22) und Containerhaken von oben. Über eine Stegschnalle (23) wird eine Verzweigung der Einzelstränge (26) durchgeführt.

Figur 16b zeigt die Konstruktion eines Toplashings mit jeweils einem Hakenstrang (22) und Containerhaken von der Seite. Über eine Stegschnalle (23) wird ein Verzweigung der Einzelstränge (26) durchgeführt.

Figur 17 zeigt die beispielhafte Anordnung eines Toplashings mit einem Doppelstrang (28) in einer bevorzugten Ausführung des Verzurrsystems positioniert in Öse Nr. 3 der beiden Dachlängsträger (13) eines Containers mit nicht dargestellter Ladung. Der Doppelstrang ist mit Hilfe der Bandverbindung (29) verbunden und wird auf der anderen Seite mit einem Gurtschloss (16) verbunden.

Figur 18 zeigt die Konstruktion eines Toplashings mit jeweils zwei Hakensträngen (28) und Containerhaken (13) auf beiden Seiten. Über eine eingenähte feste Bandverbindung (29) werden die Einzelstränge (28) zum Ladungsende geführt. Für eine bevorzugte Ausführung des Verzurrsystems beträgt die Länge dieses Toplashings zwischen 3 und 7 m.

Figur 19 zeigt die Konstruktion eines Toplashings mit jeweils zwei in der Breite verstellbaren Hakensträngen (28) und Containerhaken (13) auf beiden Seiten. Über eine eingenähte Bandverbindung (29) werden die Einzelstränge (28) zum Ladungsende geführt. Die eingenähte Bandverbindung (29) besteht aus Lochband mit Lochabständen von 5 cm bis 6 cm bzw. Lochgrößen von 5 cm bis 6 cm. Die Länge des Lochbandes ist anwendungsspezifisch; dadurch dass sich die Einzelstränge durch verschiedene Öffnungen des Lochbandes führen lassen, lässt sich die Breite des Toplashings variieren. Für eine bevorzugte Ausführung des Verzurrsystems beträgt die Länge dieses Toplashings zwischen 3 m und 7 m und die Länge des Lochbandes zwischen 0,5 m bis 1,5 m.

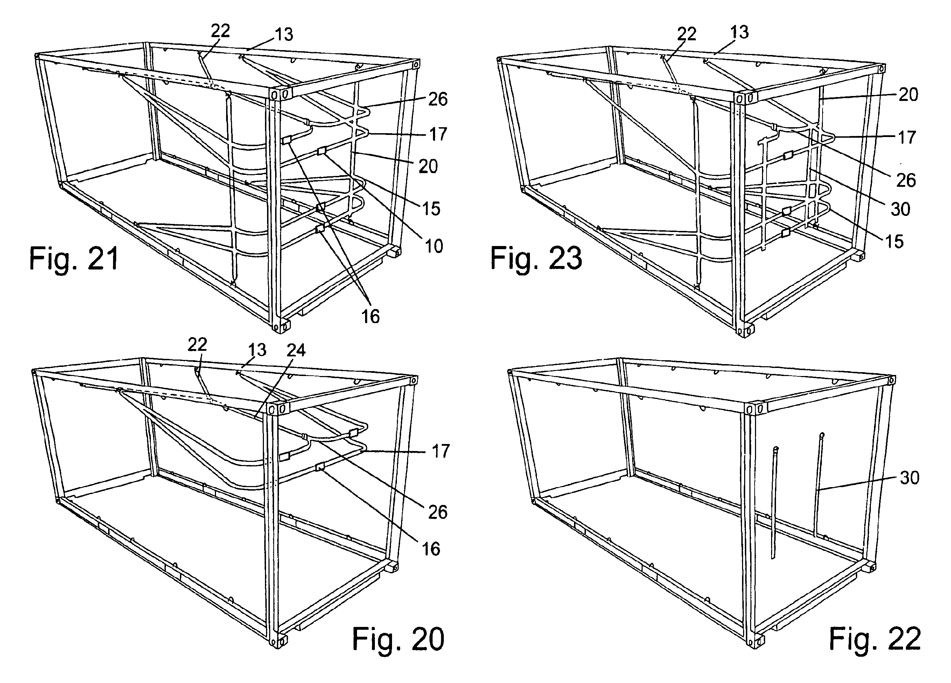

Figur 20 zeigt die beispielhafte Anordnung der Moduleeines Horizontallashing-Paares mit jeweils zwei Einzelsträngen (17) in einer bevorzugten Ausführung des Verzurrsystems positioniert in Öse Nr. 3 der beiden Dachlängsträger (13), sowie eines Toplashings (24) mit einem Hakenstrang (22) und einem verzweigten Einzelstrang (26) in einer bevorzugten Ausführung des Verzurrsystems positioniert in Öse Nr. 4 der beiden Dachlängsträger (13) eines Containers mit nicht dargestellter Ladung. Die Einzelstränge werden mit Gurtschallen (16) geschlossen.

Figur 21 zeigt die beispielhafte Anordnung der Module:
eines Horizontallashing-Paares mit jeweils zwei Einzelsträngen in einer bevorzugten Ausführung des Verzurrsystems positioniert in Öse Nr. 3 der beiden Dachlängsträger, sowie eines Horizontallashing-Paares mit jeweils zwei Einzelsträngen (15 und 17) in einer bevorzugten Ausführung des Verzurrsystems positioniert in Öse Nr. 3 der beiden Längsträger (13 und 14), sowie eines Toplashings mit einem verzweigten Einzelstrang (26) in einer bevorzugten Ausführung des Verzurrsystems positioniert in Öse Nr. 4 der beiden Dachlängsträger (13) eines Containers mit nicht dargestellter Ladung, sowie eines Abstandshalters (20) mit Containerhaken in einer bevorzugten Ausführung des Verzurrsystems positioniert in Öse Nr. 1 der Dachlängsträger des Containers (1).

Im Status der Vorbereitung des Verzurrsystems wird jeder Strang der Horizontallashings durch eines der Löcher der Abstandshalter (20) geführt und somit die Höhenposition der Horizontallashings bestimmt.

Figur 22 zeigt die beispielhafte Anordnung eines Abstandshalter-Paares (30) in einer bevorzugten Ausführung des Verzurrsystems positioniert im mittleren Bereich am Ladungsende dieses 20' Standard Containers mit nicht dargestellter Ladung. Abstandshalter ohne Containerhaken.

Figur 23 zeigt die beispielhafte Anordnung dieses Abstandshalter-Paares (30) in einer bevorzugten Ausführung des Verzurrsystems zur zusätzlichen Verbindung und Positionierung aller Lashings am Ladungsende. Die einzelnen Positionen entsprechen den Positionen in Figur 21.

Das folgenden Beispiel betrifft den Modul Blocklashing:

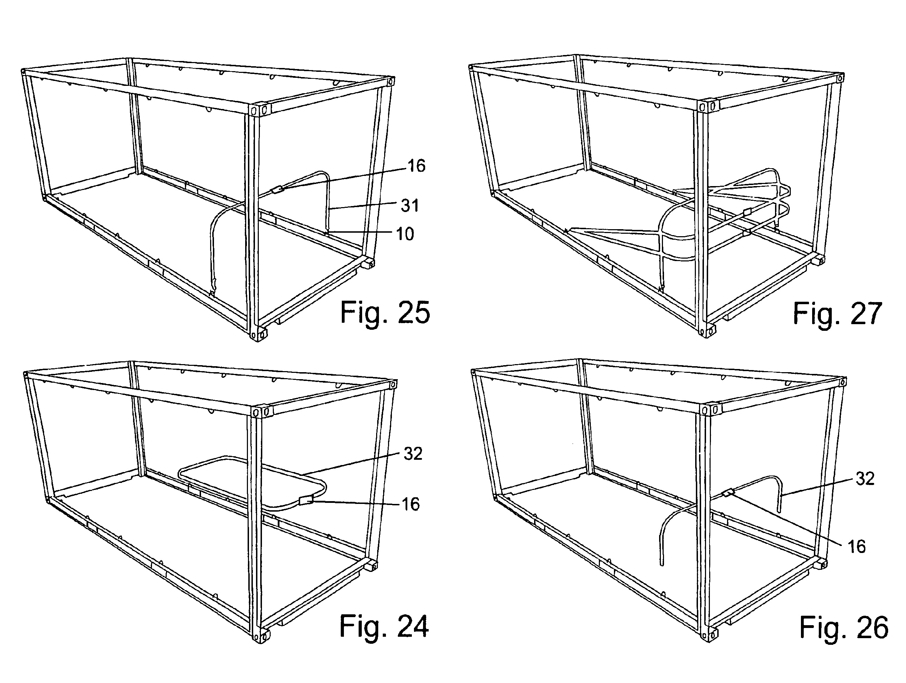

Figur 24 zeigt die beispielhafte Anordnung eines Blocklashings mit einem Einzelstrang in einer bevorzugten Ausführung des Verzurrsystems positioniert im mittleren Bereich am Ladungsende eines Containers mit nicht dargestellter Ladung.

Dieser Modul besteht aus einem Gurtband bzw. Lochband (32) mit Gurtschnalle (16) und wird als zusätzliche Horizontalbindung bei mehrlagigen Containerladungen in Längen von 3 m bis 10 m eingesetzt.

Das folgende Beispiel betrifft den Modul Backlashing:
Figur 25 zeigt die beispielhafte Anordnung eines Backlashing-Paares (31) mit jeweils einem Einzelstrang mit Containerhaken (11) in einer bevorzugten Ausführung des Verzurrsystems positioniert im Türbereich des Containers mit nicht dargestellter Ladung. Dieser Modul besteht aus einem Lochband mit angenähtem Containerhaken und wird beispielhaft bei einlagigen Containerladungen in Längen von 1 bis 6 m eingesetzt. Die Einzelstränge werden durch das Gurtschloss (16) geschlossen.
Figur 26 zeigt die beispielhafte Anordnung eines Backlashing-Paares (32) mit jeweils einem Einzelstrang ohne Containerhaken und dem Gurtschloss (16) in einer bevorzugten Ausführung des Verzurrsystems in beliebiger Position eines Containers mit nicht dargestellter Ladung. Dieser Modul besteht aus einem Lochband und wird beispielhaft bei einlagigen Containerladungen in Längen von 1 bis 6 m eingesetzt.

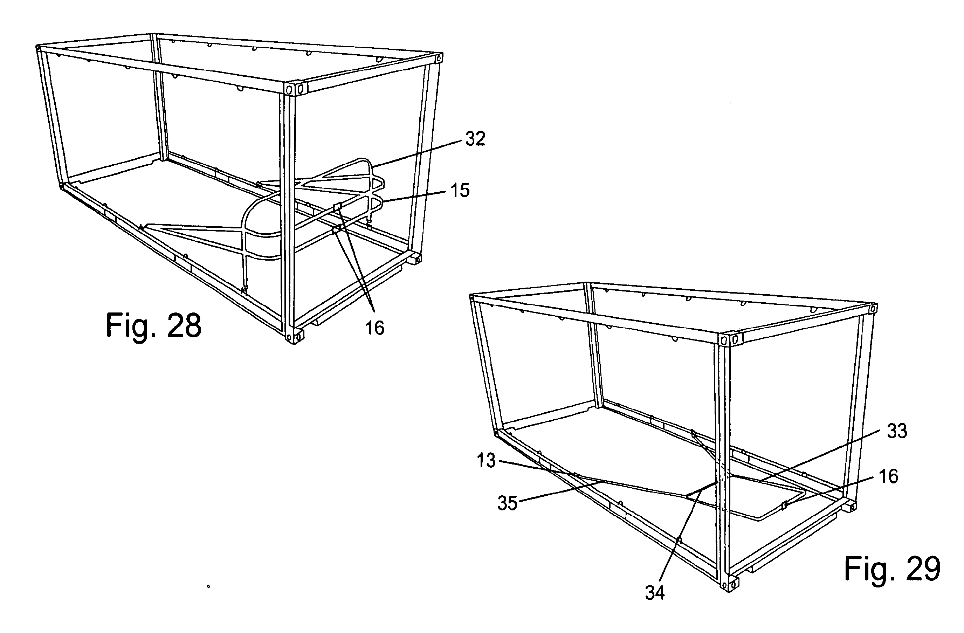

Figur 27 und 28 zeigen die beispielhafte Anordnung der Module eines Horizontallashing-Paares mit jeweils zwei Einzelsträngen (15) in einer bevorzugten Ausführung des Verzurrsystems positioniert in Öse Nr. 3 der beiden Bodenlängsträger (14), sowie eines Backlashing-Paares mit einem Einzelstrang (31) in einer bevorzugten Ausführung des Verzurrsystems positioniert in Öse Nr. 1 der beiden Bodenlängsträger (14) eines Containers mit nicht dargestellter Ladung.

Ein Backlashing ist als Lochband ausgeführt. Fig. 28 zeigt die Ausführung des Backlashings mit Lochband und angenähtem Containerhaken (32) einschließlich der Gurtschnalle (16). Alternativ kann das Backlashing als Lochband ohne Containerhaken ausgeführt sein. Die einzelnen Positionen haben die oben genannte Bedeutung.

Das folgende Beispiel betrifft das Modul Bodenlashing:
Figur 29 zeigt die beispielhafte Anordnung eines Bodenlashings (33) in einer bevorzugten Ausführung des Verzurrsystems positioniert im mittleren Bereich am Ladungsende dieses 20' Standard Containers mit nicht dargestellter Ladung mit Abstandshalter (34) und Befestigungsstränge (35) zur Befestigung an dem inneren Bodenlängsträger (14) an Öse Nr. 4.

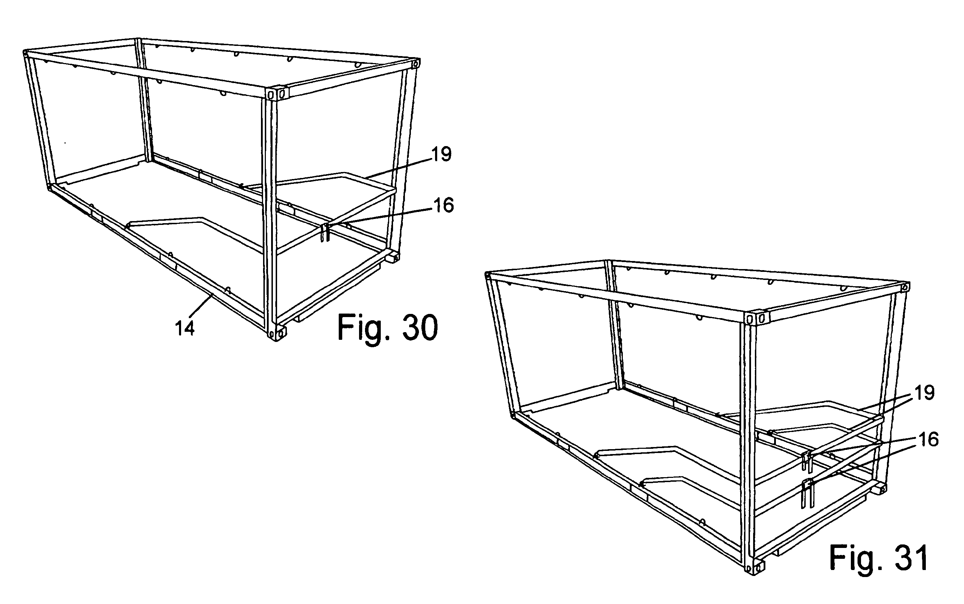

Figur 30 zeigt beispielhaft die Anordnung eines Einzelstranglashings (19) positioniert in Öse Nr. 3 der beiden inneren Bodenlängsträger (14). Der Einzelstrang ist mit einem Gurtschloss (16) verbunden.
Figur 31 zeigt beispielhaft die Anordnung von zwei Einzelstranglashings (19), wobei ein Einzelstranglashing in Öse Nr. 2 und ein weiterer in Öse Nr. 3 der beiden inneren Bodenlängsträger (14) positioniert ist. Jeder Einzelstrang des Horizontallashings ist mit einem Gurtschloss (16) versehen.

### BEZUGSZEICHENLISTE

1. Container
2. Containerboden
3.Tür
4.Stirnwand
5.Containerdach
6. Bodenlängsträger
7. Dachlängsträger
8.Türecksäule
9. Ecksäule an der Stirnwand
10.Verzurröse
11.Containerhaken
12.Lashing
13.innerer Dachlängsträger (7) mit Verzurrösen (10)
14.innerer Bodenlängsträger (6) mit Verzurrösen (10)
15.Lashing für horizontale Doppelverzurrung an 14)
16.Gurtschloss
17.Lashing für horizontale Doppelverzurrung an (13)
18.Lashing für horizontale Einfachverzurrung an (13)
19. Einzelstrang des Horizontallashings
20.Abstandhalter
21.Lochband
22.Befestigungsstrang bzw. Hakenstrang des Toplashings zur Befestigung an (13)
23.Stegschnalle
24.Einzelstrang des Toplashings
25.Verzweigung des Einzelstrangs (24) in zwei Stränge (26) zur Befestigung der Ladung
26.zwei Stränge zur Befestigung der Ladung
27.Bandumlenkung
28.Doppelstrang Toplashing
29.Bandverbindung der Doppelstränge des Toplashings
30.Abstandhalter im mittleren Bereich des Ladungsende
31.Gurtband bzw. Lochband mit Containerhaken
32.Gurtband bzw. Lochband ohne Containerhaken
33.Doppelstrang Bodenlashing
34.Bandverbindung der Doppelstränge des Bodenlashings
35.Befestigungsstrang des Bodenlashings zur Befestigung an (13)

## Patentansprüche

1. Verzurrsystem zur Sicherung von Ladungen in einem Container (1), umfassend
- einen Container (1), wobei der Container einen Containerboden (2) und ein Containerdach (5) aufweist,
- die Ladung haltenden Lashings,
- Containerösen an Dachlängsträgern (7) und/oder an
- Bodenlängsträgern (6) des Containers (1),
- Abstandshalter (20)
wobei
a. die Lashings (12) als modulares Verzurrsystem ausgeführt sind,
b. Lashing-Module vorgesehen sind,
c. die Module mindestens Horizontallashings (19) und senkrechte Abstandhalter (20) umfassen,
d. die Lashings (12) durch senkrechte Abstandhalter (20) fixiert sind, wobei die senkrechten Abstandhalter (20), aus Gewebeband bestehen und in regelmäßigen, relativ kleinen Abständen eine Mehrzahl von zueinander beabstandeten Öffnungen aufweisen, die zur Aufnahme der Lashings(12) dienen,
e. die Lashings (12) in unterschiedlicher Höhe an den senkrechten Abstandshaltern (20) befestigt sind,
f. die Ladungen über schräg gespannte Lashings (12) mit dem Container (1) verbunden sind, wobei die Lashings (12) in einem Winkel zwischen Containerdach (2) und Lashing (12) und/oder zwischen Containerboden (5) und Lashing (12) von höchstens 35° mit dem jeweiligen Befestigungspunkt des Containers (1) verbunden sind, **dadurch gekennzeichnet, dass** die Öffnungen des Abstandshalters in Form von Schlaufen durch Aufteilung von Kettfäden in regelmäßigen Abständen in dem Gewebeband erzeugt sind.

2. Verzurrsystem nach Anspruche 1, wobei der Container (1) einen Containerboden (2) und ein Containerdach (5) aufweist, **dadurch gekennzeichnet, dass** der Winkel zwischen Containerboden (2) bzw. dem Containerdach (5) und Lashing (12) im Bereich zwischen 1° bis 20° liegt.

3. Verzurrsystem nach einem der Ansprüche 1 oder 2, **dadurch gekennzeichnet, dass** alle Module aus Materialien aus der Gruppe der Kunststofffasern, Naturfasern, Gewebefolien hergestellt sind.

4. Verzurrsystem nach einem der Ansprüche 1 bis 3, **dadurch gekennzeichnet, dass** Lashings (12) mit einer Bandbreite im Bereich von 15 mm bis 500 mm und für Belastungen bis 8.000 daN eingesetzt sind.

5. Verzurrsystem nach einem der Ansprüche 1 bis 3, **dadurch gekennzeichnet, dass** als Lashings (12) Folien mit Folienbreiten im Bereich von 100 mm bis 2.000 mm und für Belastungen bis 5.000 daN eingesetzt sind.

6. Verzurrsystem nach einem der Ansprüche 1 bis 3, **dadurch gekennzeichnet, dass** als Lashings (12) Stahlbänder mit einer Bandbreiten von 3/4" (19 mm) bis 2" (51 mm) und für Belastungen bis 5.000 daN eingesetzt sind.

7. Verzurrsystem nach einem der Ansprüche 1 bis 3, **dadurch gekennzeichnet, dass** als Lashing (12) faserverstärkte Folien, Gewebefolien, Kunststoff-, Hanf- oder Stahlseile für Systembelastungen bis 10.000 daN eingesetzt sind.

8. Verzurrsystem nach einem der Ansprüche 1 bis 3 und 7, **dadurch gekennzeichnet, dass** als Lashing (12) Gurtbänder aus Kunststofffasern mit einer Bandbreite von 15 mm bis 50 mm und einer Bruchfestigkeit im Bereich von ca. 1.000 daN bis 8.000 daN, bei einer Dehnung von 2,0% bis 4,0% eingesetzt sind, was einer Bruchdehnung von ca. 7% bis 8% entspricht.

9. Verzurrsystem nach einem der Ansprüche 1 bis 8, **dadurch gekennzeichnet, dass** die Module Horizontallashing (19), Abstandhalter (20), Toplashing, Blocklashing, Backlashing und/oder Bodenlashing umfassen.

10. Verzurrsystem nach einem der Ansprüche 1 bis 9, **dadurch gekennzeichnet, dass** die seitliche Höhenposition der Horizontallashings (19) über die Abstandhalter (20) gebildet ist.

11. Verzurrsystem nach einem der Ansprüche 1 bis **10, dadurch gekennzeichnet, dass** ein Abstandhalter (20) mit Containerhaken (11) ausgeführt ist und die Länge des Lochbandes der inneren Höhe des Containers (1) entspricht.

12. Verzurrsystem nach einem der Ansprüche 1 bis 11, **dadurch gekennzeichnet, dass** der Abstandhalter (20) in einer der Ösen der oberen Dachlängsträger (7) des Containers (1) positioniert ist, die dem Ladungsende am nächsten kommen.

13. Verzurrsystem nach einem der Ansprüche 1 bis 12, **dadurch gekennzeichnet , dass** die Abstandhalter (20) aus Gurlbändern gebildet sind.

14. Verzurrsystem nach einem der Ansprüche 1 bis 13, **dadurch gekennzeichnet, dass** ein Abstandhalter (20) als Lochband mit 40 mm bis 50 mm Breite und mit Lochabständen von etwa 60 mm bis 500 mm ausgeführt ist.

15. Verzurrsystem nach einem der Ansprüche 1 bis 14, **dadurch gekennzeichnet, dass** ein Abstandhalter (20) als Gurtband mit angenähten Schlaufen in Abständen von etwa 60 mm bis 2.000 mm ausgeführt ist.

16. Verzurrsystem nach einem der Ansprüche 1 bis 14, **dadurch gekennzeichnet, dass** ein Abstandhalter (20) als Gurtband mit angenähten Metall- oder Kunststoffteilen in Lochabständen von ca. 60 mm bis 2.000 mm ausgeführt ist.

17. Verzurrsystem nach Anspruch 16, **dadurch gekennzeichnet, dass** die Metall- oder Kunststoffteile als Zapfen, Stifte, rechteckige Ösen oder Ringe ausgeführt sind.

18. Verzurrsystem nach einem der Ansprüche 10 bis 15, **dadurch gekennzeichnet, dass** ein Abstandhalter (20) ohne Containerhaken (11) für den Einsatz mit Toplashings ausgeführt ist und die Länge des Lochbandes etwa der Höhe der Ladung im Container (1) entspricht.

19. Verzurrsystem nach Anspruch 18 **dadurch gekennzeichnet, dass** zwei senkrecht positionierte Abstandhalter (20) im mittleren Frontbereich jedes Ladungsteils einen Toplashing und/oder die oberen Horizontallashings und/oder einen Blocklashing und/oder die unteren Horizontallashings und/oder einen Bodenlashing in Position halten.

20. Verfahren zur Sicherung von Ladungen in geschlossenen Containern (1), wobei der Container einen Containerboden (2) und ein Containerdach (5) aufweist, mit Hilfe von Lashings (12), wobei die Ladung über schräg gespannte Lashings (12) mit dem Container (1) verbunden wird, wobei Containerösen an Dachlängsträgern (7) und/oder Bodenlängsträgern (6) des Containers (1) positioniert werden, wobei die Lashings (12) in einem Winkel zwischen Containerboden (2) und Lashing (12) und/oder zwischen Containerdach (5) und Lashing (12) von höchstens 35° mit der jeweiligen Containeröse verbunden wird, wobei die senkrechten Abstandhalter (20) eine Mehrzahl von zueinander beabstandeten Öffnungen aufweisen, die zur Aufnahme der Lashings (12) dienen, wobei
a. die Lashings (12) als modulares Verzurrsystem ausgeführt werden,
b. Lashing-Module vorgesehen werden,
c. die Module mindestens Horizontallashings (19) und senkrechte Abstandhalter (20) umfassen,
d. die Lashings (12) durch senkrechte Abstandhalter (20) fixiert werden, wobei die senkrechten Abstandhalter (20), aus Gewebeband bestehen und in regelmäßigen, relativ kleinen Abständen eine Mehrzahl von zueinander beabstandeten Öffnungen aufweisen, die zur Aufnahme der Lashings (12) dienen,
e. die Lashings (12) in unterschiedlicher Höhe an den senkrechten Abstandshaltern (20) befestigt werden,
f. die Ladungen über schräg gespannte Lashings (12) mit dem Container (1) verbunden werden, wobei die Lashings (12) in einem Winkel zwischen Containerdach (2) und Lashing (12) und/oder zwischen Containerboden (5) und Lashing (12) von höchstens 35° mit dem jeweiligen Befestigungspunkt des Containers (1) verbunden werden, **dadurch gekennzeichnet, dass** die Öffnungen des Abstandshalters in Form von Schlaufen durch Aufteilung der Kettfäden in regelmäßigen Abständen Schlaufen in dem Gewebeband Schlaufen in dem Gewebeband erzeugt werden.

21. Verfahren nach Anspruch 21, **dadurch gekennzeichnet, dass** die Lashings (12) durch senkrechte Abstandhalter (20) fixiert werden.

22. Verfahren nach Anspruch 20 oder 21, **dadurch gekennzeichnet, dass** die senkrechten Abstandhalter (20) an zu Ecken des Containers (1) benachbarten Befestigungspunkten angeordnet werden.

23. Verfahren nach einem der Ansprüche 20 bis 22, **dadurch gekennzeichnet, dass** Enden der Lashings (12) in einem mittleren Bereich von Seitenwänden des Containers (1) angeordnet werden.

## Claims

1. Lashing system for securing loads in a container (1), comprising
- a container (1) with a floor (2) and a roof (5),
- lashings securing the load,
- container lugs on longitudinal roof beams (7) and/or on
- longitudinal floor beams (6) of the container (1),
- [and] spacers (20),
wherein
a. the lashings (12) are configured as a modular lashing system,
b. lashing modules are provided,
c. the modules comprise at least horizontal lashings (19) and vertical spacers (20),
d. the lashings (12) are fixed by vertical spacers (20) which are made of fabric tape and have a plurality of spaced-apart openings at regular, relatively small intervals, that serve to receive the lashings (12),
e. the lashings (12) are attached to the vertical spacers (20) at different heights,
f. the loads are attached to the container (1) by obliquely tensioned lashings (12) that are attached to the respective fixing point of the container (1) at an angle between container roof *[sic]* (2) and lashing (12) and/or between container floor *[sic]* (5) and lashing (12) of not more than 35°,
**characterized in that**
the openings in the spacer are formed as loops by splitting warp threads in the fabric tape at regular intervals.

2. Lashing system according to Claim 1, wherein the container (1) has a container floor (2) and a container roof (5), **characterized in that** the angle between container floor (2) or container roof (5) and lashing (12) is in the range of 1° to 20°.

3. Lashing system according to either of Claims 1 and 2, **characterized in that** all modules are made from materials from the group comprising synthetic fibres, natural fibres [and] woven sheet.

4. Lashing system according to any one of Claims 1 to 3, **characterized in that** lashings (12) with a tape width in the range of from 50 mm to 500 mm, for loadings of up to 8,000 daN, are used.

5. Lashing system according to any one of Claims 1 to 3, **characterized in that** sheets with widths in the range of from 100 mm to 2,000 mm, for loadings of up to 5,000 daN, are used as lashings (12).

6. Lashing system according to any one of Claims 1 to 3, **characterized in that** steel strips with widths of from 3/4" (19 mm) to 2" (51 mm), for loadings of up to 5,000 daN, are used as lashings (12).

7. Lashing system according to any one of Claims 1 to 3, **characterized in that** fibre-reinforced sheets, fabric sheets, plastic ropes, hemp ropes or steel ropes, for system loadings of up to 10,000 daN, are used as lashing (12).

8. Lashing system according to any one of Claims 1 to 3 and 7, **characterized in that** webbing tapes made from synthetic fibre with a tape width of 50 mm to 50 mm and a breaking strength in the range of from approx. 1,000 daN to 8,000 daN with an elongation of 2.0% to 4.0%, corresponding to an elongation at break of approx. 7% to 8%, are used as lashing (12).

9. Lashing system according to any one of Claims 1 to 8, **characterized in that** the modules comprise horizontal lashing (19), spacers (20), top lashing, block lashing, back lashing and/or floor lashing.

10. Lashing system according to any one of Claims 1 to 9, **characterized in that** the lateral height of the horizontal lashings (19) is set by the spacers (20).

11. Lashing system according to any one of Claims 1 to 10, **characterized in that** a spacer (20) is fabricated with container hooks (11) and the length of the holed tape corresponds to the internal height of the container (1).

12. Lashing system according to any one of Claims 1 to 11, **characterized in that** the spacer (20) is positioned in one of the lugs on the upper longitudinal roof beams (7) of the container (1) nearest to the end of the load.

13. Lashing system according to any one of Claims 1 to 12, **characterized in that** the spacers (20) are made from webbing tapes.

14. Lashing system according to any one of Claims 1 to 13, **characterized in that** a spacer (20) is configured as a holed tape 40 mm to 50 mm wide with holes at intervals of about 60 mm to 500 mm.

15. Lashing system according to any one of Claims 1 to 14, **characterized in that** a spacer (20) is configured as a webbing tape with loops attached at intervals of about 60 mm to 2,000 mm.

16. Lashing system according to any one of Claims 1 to 14, **characterized in that** a spacer (20) is configured as a webbing tape with metal or plastic parts attached at hole intervals of about 60 mm to 2,000 mm.

17. Lashing system according to Claim 16, **characterized in that** the metal or plastic parts are configured as pegs, pins, rectangular lugs, or rings.

18. Lashing system according to any one of the Claims 10 to 15, **characterized in that** a spacer (20) without container hooks (11) is configured for use with top lashings and the length of the holed tape approximately corresponds to the height of the load in the container (1).

19. Lashing system according to Claim 18, **characterized in that** two vertically positioned spacers (20) in the middle front region of each load part hold in position a top lashing and/or the upper horizontal lashings and/or a block lashing and/or the lower horizontal lashings and/or a floor lashing.

20. Method for securing loads in closed containers (1) where the container has a floor (2) and a roof (5), by means of lashings (12), the load being attached to the container (1) by obliquely tensioned lashings (12), container lugs being positioned on longitudinal roof beams (7) and/or longitudinal floor beams (6) of the container (1), the lashings (12) being attached to the respective container lug at an angle between container floor (2) and lashing (12) and/or between container roof (5) and lashing (12) of not more than 35°, the lashings vertical spacers (20) having a plurality of spaced-apart openings that serve to receive the lashings (12),
wherein
a. the lashings (12) are configured as a modular lashing system,
b. lashing modules are provided,
c. the modules comprise at least horizontal lashings (19) and vertical spacers (20),
d. the lashings (12) are fixed by vertical spacers (20) which are made of fabric tape and have a plurality of spaced-apart openings at regular, relatively small intervals, that serve to receive the lashings (12),
e. the lashings (12) are attached to the vertical spacers (20) at different heights,
f. the loads are attached to the container (1) by obliquely tensioned lashings (12) that are attached to the respective fixing point of the container (1) at an angle between container roof *[sic]* (2) and lashing (12) and/or between container floor [*sic*] (5) and lashing (12) of not more than 35°,
**characterized in that**
the openings in the spacer are formed as loops by splitting warp threads in the fabric tape at regular intervals.

21. Method according to Claim 21 [sic]*,* **characterized in that** the lashings (12) are fixed by vertical spacers (20).

22. Method according to Claim 20 or Claim 21, **characterized in that** the vertical spacers (20) are located at fixing points adjacent to corners of the container (1).

23. Method according to any one of Claims 20 to 22, **characterized in that** ends of lashings (12) are located in a central region of side walls of the container (1).

## Revendications

1. Système d'arrimage pour la sécurisation de charges dans un conteneur (1), comprenant
- un conteneur (1), le conteneur présentant un fond de conteneur (2) et un toit de conteneur (5),
- des amarres maintenant la charge,
- des oeillets de conteneur sur des longerons de toit (7) et/ou sur
- des longerons de fond (6) du conteneur (1),
- des écarteurs (20),
dans lequel
a. les amarres (12) sont réalisées sous forme de système d'arrimage modulaire,
b. des modules d'amarrage sont prévus,
c. les modules comportent au moins des amarres horizontales (19) et des écarteurs verticaux (20),
d. les amarres (12) sont fixées par des écarteurs verticaux (20), les écarteurs verticaux (20) étant constitués de ruban textile et présentant à distances régulières, relativement faibles, une pluralité d'ouvertures distantes les unes des autres, qui servent à recevoir les amarres (12),
e. les amarres (12) sont fixées à hauteur différente sur les écarteurs verticaux (20),
f. les charges sont reliées au conteneur (1) par l'intermédiaire d'amarres (12) tendues en oblique, les amarres (12) étant assemblées sous un angle, entre le toit de conteneur (2) et l'amarre (12) et/ou entre le fond de conteneur (5) et l'amarre (12), de 35° maximum avec le point de fixation respectif du conteneur (1),
**caractérisé en ce que** les ouvertures de l'écarteur en forme de boucles sont créées par répartition de fils de chaîne à distances régulières dans le ruban textile.

2. Système d'arrimage selon la revendication 1, le conteneur (1) présentant un fond de conteneur (2) et un toit de conteneur (5), **caractérisé en ce que** l'angle entre le fond de conteneur (2) ou le toit de conteneur (5) et l'amarre (12) se situe dans une plage de 1° à 20°.

3. Système d'arrimage selon l'une des revendications 1 et 2, **caractérisé en ce que** tous les modules sont fabriqués en matériaux du groupe des fibres de matière plastique, fibres naturelles, feuilles de tissu.

4. Système d'arrimage selon l'une des revendications 1 à 3, **caractérisé par** l'utilisation d'amarres (12) d'une largeur de bande dans la plage de 15 mm à 500 mm et pour des sollicitations allant jusqu'à 8.000 daN.

5. Système d'arrimage selon l'une des revendications 1 à 3, **caractérisé en ce que** des feuilles de largeurs dans la plage de 100 mm à 2.000 mm et pour des sollicitations allant jusqu'à 5.000 daN sont utilisées en tant qu'amarres (12).

6. Système d'arrimage selon l'une des revendications 1 à 3, **caractérisé en ce que** des rubans d'acier de largeurs de 3/4" (19 mm) à 24" (51 mm) et pour des sollicitations allant jusqu'à 5.000 daN sont utilisés en tant qu'amarres (12).

7. Système d'arrimage selon l'une des revendications 1 à 3, **caractérisé en ce que** des feuilles renforcées de fibres, des feuilles de tissu, des câbles d'acier, de chanvre ou de matière plastique, sont utilisés en tant qu'amarres pour des sollicitations du système allant jusqu'à 10.000 daN.

8. Système d'arrimage selon l'une des revendications 1 à 3 et 7, **caractérisé en ce que** des sangles en fibres de matière plastique, d'une largeur de 15 mm à 50 mm et d'une résistance à la rupture dans la plage d'environ 1.000 daN à 8.000 daN, pour un allongement de 2,0% à 4,0%, soit un allongement à la rupture d'environ 7% à 8%, sont utilisées en tant qu'amarres (12).

9. Système d'arrimage selon l'une des revendications 1 à 8, **caractérisé en ce que** les modules comportent l'amarre horizontale (19), l'écarteur (20), l'amarre de sommet, l'amarre de bloc, l'amarre arrière et/ou l'amarre de fond.

10. Système d'arrimage selon l'une des revendications 1 à 9, **caractérisé en ce que** la position en hauteur latérale des amarres horizontales (19) est formée par l'intermédiaire des écarteurs (20).

11. Système d'arrimage selon l'une des revendications 1 à 10, **caractérisé en ce qu'**un écarteur (20) est réalisé avec des crochets de conteneur (11) et la longueur de la bande perforée correspond à la hauteur intérieure du conteneur (1).

12. Système d'arrimage selon l'une des revendications 1 à 11, **caractérisé en ce que** l'écarteur (20) est positionné dans l'un des oeillets des longerons de toit supérieur (7) du conteneur, lesquels oeillets sont les plus proches de l'extrémité de la charge.

13. Système d'arrimage selon l'une des revendications 1 à 12, **caractérisé en ce que** les écarteurs (20) sont formés de sangles.

14. Système d'arrimage selon l'une des revendications 1 à 13, **caractérisé en ce qu'**un écarteur (20) est réalisé sous forme de bande perforée d'une largeur de 40 mm à 50 mm et avec des écartements de trous d'environ 60 mm à 500 mm.

15. Système d'arrimage selon l'une des revendications 1 à 14, **caractérisé en ce qu'**un écarteur (20) est réalisé sous forme de sangle avec des boucles cousues à distances d'environ 60 mm à 2.000 mm.

16. Système d'arrimage selon l'une des revendications 1 à 14, **caractérisé en ce qu'**un écarteur (20) est réalisé sous forme de sangle avec des pièces métalliques ou en matière plastique cousues à écartements de trous d'environ 60 mm à 2.000 mm.

17. Système d'arrimage selon la revendication 16, **caractérisé en ce que** les pièces métalliques ou en matière plastique sont réalisées sous forme de tourillons, de broches, d'oeillets rectangulaires ou de bagues.

18. Système d'arrimage selon l'une des revendications 10 à 15, **caractérisé en ce qu'**un écarteur (20) est réalisé sans crochets de conteneur (11) pour l'utilisation avec des amarres de sommet et la longueur de la bande perforée correspond approximativement à la hauteur de la charge dans le conteneur (1).

19. Système d'arrimage selon la revendication 18, **caractérisé en ce que** deux écarteurs (20) positionnés verticalement maintiennent en position, dans la zone frontale centrale de chaque charge, une amarre de sommet et/ou les amarres horizontales supérieures et/ou une amarre de bloc et/ou les amarres horizontales inférieures et/ou une amarre de fond.

20. Procédé de sécurisation de charges dans des conteneurs fermés (1), le conteneur présentant un fond (2) et un toit (5), à l'aide d'amarres (12), la charge étant reliée au conteneur (1) par l'intermédiaire d'amarres (12) tendues en oblique, des oeillets de conteneur étant positionnés sur des longerons de toit (7) et/ou sur des longerons de fond (6) du conteneur (1), les amarres (12) étant assemblées sous un angle, entre le fond de conteneur (2) et l'amarre (12) et/ou entre le toit de conteneur (5) et l'amarre (12), de 35° maximum avec l'oeillet de conteneur respectif, les écarteurs verticaux (20) présentant une pluralité d'ouvertures distantes les unes des autres, qui servent à recevoir les amarres (12),
dans lequel
a. les amarres (12) sont réalisées sous forme de système d'arrimage modulaire,
b. des modules d'amarres sont prévus,
c. les modules comportent au moins des amarres horizontales (19) et des écarteurs verticaux (20),
d. les amarres (12) sont fixées par des écarteurs verticaux (20), les écarteurs verticaux (20) étant constitués de ruban textile et présentant à distances régulières, relativement faibles, une pluralité d'ouvertures distantes les unes des autres, qui servent à recevoir les amarres (12),
e. les amarres (12) sont fixées à différente hauteur sur les écarteurs verticaux (20),
f. les charges sont reliées au conteneur (1) par l'intermédiaire d'amarres (12) tendues en oblique, les amarres (12) étant assemblées sous un angle, entre le toit de conteneur (2) et l'amarre (12) et/ou entre le fond de conteneur (5) et l'amarre (12), de 35° maximum avec le point de fixation respectif du conteneur (1),
**caractérisé en ce que** les ouvertures de l'écarteur en forme de boucles sont créées par répartition des fils de chaîne à distances régulières dans le ruban textile.

21. Procédé selon la revendication 21, **caractérisé en ce que** les amarres (12) sont fixées par des écarteurs verticaux (20).

22. Procédé selon l'une des revendications 20 et 21, **caractérisé en ce que** les écarteurs verticaux (20) sont disposés en des points de fixation voisins des angles du conteneur (1).

23. Procédé selon l'une des revendications 20 à 22, **caractérisé en ce que** des extrémités des amarres (12) sont disposées dans une zone centrale de parois latérales du conteneur (1).
